(19) Europäisches Patentamt
European Patent Office
Office européen des brevets

(11) EP 4 386 015 A1

(12) EUROPEAN PATENT APPLICATION

(43) Date of publication:
19.06.2024 Bulletin 2024/25

(21) Application number: 23215649.7

(22) Date of filing: 11.12.2023

(51) International Patent Classification (IPC):
C08F 8/44 (2006.01) C09D 153/02 (2006.01)
B01D 71/28 (2006.01) B01D 71/80 (2006.01)
C08F 8/24 (2006.01) C08F 8/32 (2006.01)
C08J 5/18 (2006.01)

(52) Cooperative Patent Classification (CPC):
(C-Sets available)
C09D 153/025; B01D 71/28; B01D 71/80;
C08F 8/24; C08F 8/32; C08F 8/44; C08J 5/18;
B01D 2323/30; B01D 2325/16; B01D 2325/42

(Cont.)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
KH MA MD TN

(30) Priority: 13.12.2022 US 202263387119 P

(71) Applicant: Notark LLC
Houston, TX 77084 (US)

(72) Inventors:
- BENING, Robert
Houston, Texas 77084 (US)
- YAN, Jiaqi
Houston, Texas 77084 (US)
- TOCCHETTO, Roger
Houston, Texas 77084 (US)
- TIAN, Jason
Houston, Texas 77084 (US)
- MHETAR, Vijay
Houston, Texas 77084 (US)
- DESHMUKH, Sandesh
Houston, Texas 77084 (US)
- DING, Ruidong
Houston, Texas 77084 (US)

(74) Representative: Henkel & Partner mbB
Patentanwaltskanzlei, Rechtsanwaltskanzlei
Maximiliansplatz 21
80333 München (DE)

# (54) QUATERNIZED STYRENIC BLOCK COPOLYMERS AND METHODS OF PREPARATION THEREOF

(57) The disclosure relates to a quaternized styrenic block copolymer (QSBC) and a cross-linked QSBC (xQSBC). The QSBC comprises at least one block copolymer selected from a triblock copolymer, a tetrablock copolymer, a pentablock copolymer, and mixtures thereof. The block copolymer contains at least one block A or A', each independently derived from a vinyl aromatic monomer and a block B derived from a conjugated diene monomer or a combination of a vinyl aromatic monomer and a conjugated diene monomer. At least one polymerized vinyl aromatic unit in the block A and/or A' comprises a quaternary ammonium group. The xQSBC shows high ion conductivity, improved dimensional stability, and balanced mechanical properties. The QSBC has applications in anion exchange membranes (AEMs), fuel cell, electrolyzer, etc.

EP 4 386 015 A1

(52) Cooperative Patent Classification (CPC): (Cont.)

C-Sets
**C08F 8/24, C08F 297/04;**
**C08F 8/32, C08F 8/24, C08F 297/04;**
**C08F 8/44, C08F 8/32, C08F 8/24, C08F 297/04**

## Description

### FIELD

The disclosure relates to quaternized styrenic block copolymers and cross-linked quaternized styrenic block copolymers, methods of preparation, and applications thereof.

### BACKGROUND

Anion exchange membranes (AEMs) are polymer membranes that selectively allow anions to pass through due to the presence of positively charged functional groups. They are used in various applications, including fuel cells, electrolyzers, advanced batteries, electrochemical hydrogen compressors, sensors, actuators, water treatment systems, etc. These applications often require specific properties, such as chemical stability at high pH and temperature, high ion conductivity, good mechanical properties, scalability in synthesis, excellent selective permeability, superior electrical characteristics, etc.

The performance of the AEM is determined by the choice of materials used. Polymeric materials can be characterized by their structures, compositions, functional groups, molecular weights, and other factors, which can be tailored for different end-use applications. Functionalization techniques, such as chloromethylation, radical bromination, Friedel-Crafts acylation, epoxidation, sulfonation, etc., can be employed to introduce ionic groups, such as quaternary ammonium groups, which can be further modified for AEM preparation. Existing AEMs face challenges related to poor stability in a basic environment, low ionic conductivity, and reduced mechanical strength due to water absorption.

There is still a need of a polymer containing quaternary ammonium groups having improved stability, high ion conductivity and electrochemical performance, and balanced mechanical properties for use in AEMs.

### SUMMARY

In one aspect, the disclosure relates to a quaternized styrenic block copolymer (QSBC) comprising a block copolymer selected from a triblock copolymer, a tetrablock, a pentablock copolymer, and mixtures thereof. The triblock copolymer has a general configuration selected from: A-B-A', B-A-B, B-A'-B, (A-B)nX, (A'-B)nX, (B-A)nX, (B-A')nX, and mixtures thereof. Each block B in the triblock copolymer is a copolymer block of a vinyl aromatic monomer and a conjugated diene monomer. The tetrablock copolymer has a general configuration selected from: A-A-B-A, A'-A'-B-A', A'-A-B-A, A'-A-B-A', A-A'-B-A', and mixtures thereof. Each block B in the tetrablock copolymer is a polymer block of a conjugated diene monomer or a copolymer block of a vinyl aromatic monomer and a conjugated diene monomer. The pentablock copolymer has a general configuration selected from: A-B-A-B-A, A'-B-A'-B-A', A'-B-A-B-A, A'-B-A-B-A', A-B-A'-B-A, B-A-B-A-B, B-A'-B-A'-B, B-A'-B-A-B, (A-B-A')nX, (A'-B-A)nX, (B-A-B)nX, (B-A'-B)nX, and mixtures thereof. Each block B in the pentablock copolymer is a polymer block of a conjugated diene monomer or a copolymer block of a vinyl aromatic monomer and a conjugated diene monomer. In the triblock, the tetrablock, or the pentablock copolymer, n is an integer from 2 to 30, X is a residue of a coupling agent, and each block A and A' is independently a polymer block of a vinyl aromatic monomer and at least one polymerized vinyl aromatic unit in at least one block A and A' has a general formula (I):

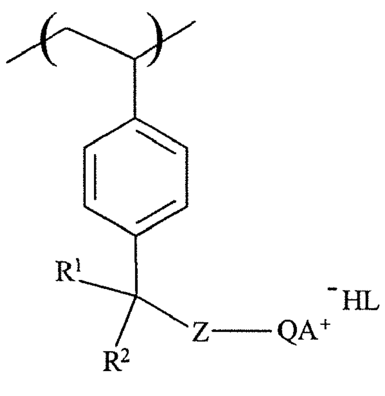

(I)

wherein, $R^1$ and $R^2$ independently is a $C_1$ to $C_5$ alkyl group; Z is any of a linear alkyl chain of $C_{1-12}$, a cyclic alkyl chain

of $C_{3-12}$, or a branched alkyl chain of $C_{4-12}$; $QA^+$ is a quaternary ammonium group; and HL is a counter ion selected from $OH^-$, $HCO_3^-$, $CO_3^{2-}$, $F^-$, $Cl^-$, $Br^-$, and $I^-$.

In a second aspect, the QSBC is cross-linked with a cross-linking agent to obtain a cross-linked quaternized styrenic block copolymer (xQSBC).

In a third aspect, a film comprises the cross-linked quaternized styrenic block copolymer, and wherein the film has a thickness of 0.1 to 500 $\mu$m.

In a fourth aspect, the film after aging in 1M KOH solution at 80°C for 1000 hours, has a reduction in $OH^-$ ion conductivity of < 50% than $OH^-$ ion conductivity of the film before aging, both measured in mS/cm at 80°C.

## DESCRIPTION

The following terms will have the following meanings:

"At least one of [a group such as A, B, and C]" or "any of [a group such as A, B, and C]" means a single member from the group, more than one member from the group, or a combination of members from the group. For example, at least one of A, B, and C includes, for example, A only, B only, or C only, as well as A and B, A and C, B and C; or A, B, and C, or any other all combinations of A, B, and C.

A list of embodiments presented as "A, B, or C" is to be interpreted as including the embodiments, A only, B only, C only, "A or B," "A or C," "B or C," or "A, B, or C."

"Vinyl content" refers to a content of conjugated diene monomers that is polymerized via 1,2-addition in the case of butadiene, or via 3,4-addition in case of isoprene, resulting in a monosubstituted olefin, or vinyl group, adjacent to the polymer backbone. The vinyl content can be measured by $^1$H nuclear magnetic resonance spectrometry (NMR).

"Coupling efficiency", expressed as % CE, is calculated using the values of the wt.% of the coupled polymer and the wt.% of the uncoupled polymer. The wt.% of the coupled and the uncoupled polymer are determined using the output of the differential refractometer detector.

"Polystyrene content" or PSC of a block copolymer refers to the wt.% of the polymerized vinyl aromatic monomer, e.g., styrene in the block copolymer, calculated by dividing the sum of molecular weight of all polymerized vinyl aromatic units by the total molecular weight of the block copolymer. PSC can be determined using any suitable methodology such as $^1$H NMR.

"Hydrogenation level" in a block copolymer refers to the % of original unsaturated bonds which become saturated upon hydrogenation. Hydrogenation level in hydrogenated vinyl aromatic polymers can be determined using UV-VIS spectrophotometry and/or $^1$H NMR. Hydrogenation level in hydrogenated diene polymers can be determined using $^1$H NMR.

"Molecular weight" or $M_w$ refers to the polystyrene equivalent molecular weight in kg/mol of a polymer block or a block copolymer. $M_w$ can be measured with gel permeation chromatography (GPC) using polystyrene calibration standards, such as is done according to ASTM 5296-19. The GPC detector can be an ultraviolet or refractive index detector or a combination thereof. The chromatograph is calibrated using commercially available polystyrene molecular weight standards. $M_w$ of polymers measured using GPC so calibrated are polystyrene equivalent molecular weights or apparent molecular weights. $M_w$ expressed herein is measured at the peak of the GPC trace and are commonly referred to as polystyrene equivalent "peak molecular weight," designated as $M_p$.

"Membrane" refers to a continuous, pliable sheet or layer of a material (a film or coating, etc.), is a selective barrier which allows something, e.g., molecules, ions, gases, or particles, etc., to pass through but stops others.

"Anion exchange membrane" or "alkaline exchange membrane" or AEM in an electrochemical cell refers to a semi-permeable membrane to separate reactants present around the two electrodes while transporting the anions essential for the cell operation.

"Ion Exchange Capacity" or IEC refers to the total active sites or functional groups responsible for ion exchange in a polymer. A conventional acid-base titration method can be used to determine the IEC. See International Journal of Hydrogen Energy, Volume 39, Issue 10, March 26, 2014, Pages 5054-5062, "Determination of the ion exchange capacity of anion-selective membrane." IEC is the inverse of "equivalent weight" or EW, which is the weight of the polymer required to provide 1 mole of exchangeable protons.

"Ion conductivity" is a measure of a substance's (here membrane's) tendency towards ionic (e.g., $OH^-$) conduction. Ionic conduction is the movement of ions and one mechanism of current. Ion conductivity is commonly measured by methods such as electrochemical impedance spectroscopy.

"Perm-selectivity" refers to the degree to which a membrane is permeable to counter-ions and impermeable to co-ions. When an electric current is applied to an electrochemical cell having an AEM, counter-ions (anions, e.g., $OH^-$) in solution will cross the AEM and theoretically, most co-ions (cations) will be rejected by the membrane. In practice however, some cations will cross the AEM. The passage of these co-ions across the membrane reduces the overall process efficiency. Membranes that have a high perm-selectivity, i.e., highly permeable to counter-ions and highly

impermeable to co-ions, are more efficient than membranes having a lower perm-selectivity. Perm-selectivity can be measured via known methods including permeation cells, size exclusion chromatography, ion selective electrodes, conductivity measurements, static membrane potential measurement cell, etc.

"Resistance" or "resistivity" or "electrical resistivity" of an AEM refers to an expression of how strongly the membrane resists the flow of electric current. When resistivity is high, more current, and thus more energy, must be applied to the electrochemical cell to facilitate ion transfer across the membrane to perform electrochemical separation. Generally, the lower the resistivity of the AEM, the more efficient the membrane. Resistivity can be expressed in units of resistance by area, e.g., ohm-square centimeters, $\Omega.cm^2$. Resistivity can be measured via known methods including electrochemical impedance spectroscopy, four-probe method, current-voltage characteristics, LCR resistance meter, etc.

"Dry" or "dry condition" refers to or describes the state of hydration of the material or membrane which has absorbed essentially no or only insignificant amounts of liquid (e.g., water, alkaline solution, organic solvent, etc.). For example, a material or membrane which is merely in contact with the atmosphere is considered to be in the dry condition.

"Aged" or "after aging" refers to a process in which a sample is subjected to a solution (e.g., acidic solution, alkaline solution, etc.) over a period of time and at a specific temperature to observe/measure changes in properties of that sample. Tests / measurements are performed after taking out samples from the respective solution.

The disclosure relates to a quaternized styrenic block copolymer (QSBC) and a cross-linked version thereof, i.e., a cross-linked quaternized styrenic block polymer (xQSBC). The QSBC is obtained by halogenation and quaternization a styrenic block copolymer (SBC) precursor. The xQSBC can be obtained by cross-linking the QSBC, or by cross-linking and quaternizing the halogenated SBC in the same step. The xQSBC has high ion conductivity, improved dimensional stability, and balanced mechanical properties, which can be useful in AEMs, fuel cells, electrolyzers, etc.

(Styrenic Block Copolymer (SBC) Precursor)

The SBC precursor is any of linear, branched, or radial block copolymer having a block A, a block A', and a block B. In embodiments, the SBC precursor comprises blocks A and A' same or different, independently a polymer block of a vinyl aromatic monomer, and a block B containing a polymer block of a conjugated diene monomer, or a copolymer block of a conjugated diene monomer and a vinyl aromatic monomer. The SBC precursor is hydrogenated prior to forming the QSBC / xQSBC via subsequent steps.

In embodiments, the SBC precursor is a triblock copolymer having a general configuration selected from: A-B-A', B-A-B, B-A'-B, (A-B)nX, (A'-B)nX, (B-A)nX, (B-A')nX, and mixtures thereof. Each block B in the triblock copolymer is a copolymer block of a conjugated diene monomer and a vinyl aromatic monomer.

In embodiments, the SBC precursor is a tetrablock copolymer having a general configuration selected from: A-A-B-A, A'-A'-B-A', A'-A-B-A, A'-A-B-A', A-A'-B-A', and mixtures thereof. In embodiments, each block B in the tetrablock copolymer is a polymer block of a conjugated diene monomer, or a copolymer block of a conjugated diene monomer and a vinyl aromatic monomer.

In embodiments, the SBC precursor is a pentablock copolymer having a general configuration selected from: A-B-A-B-A, A'-B-A'-B-A', A'-B-A-B-A, A'-B-A-B-A', A-B-A'-B-A, B-A-B-A-B, B-A'-B-A'-B, B-A'-B-A-B, (A-B-A')nX, (A'-B-A)nX, (B-A-B)nX, (B-A'-B)nX, and mixtures thereof. In embodiments, each block B in the pentablock copolymer is a polymer block of a conjugated diene monomer, or a copolymer block of a conjugated diene monomer and a vinyl aromatic monomer. Standard analytical techniques including $^1H$ NMR can be used to detect the configuration / structure of the SBC precursor in the QSBC or xQSBC.

In the triblock copolymer, the tetrablock, or the pentablock copolymer, n is an integer from 2 to 30; and X is a residue of a coupling agent.

In embodiments, the vinyl aromatic monomer is selected from the group consisting of styrene, para-substituted styrene, ortho-substituted styrene, meta-substituted styrene, alpha-methylstyrene, 1,1-diphenylethylene, 1,2-diphenylethylene, and mixtures thereof.

In embodiments, the para-substituted styrene monomer is selected from the group consisting of para-methylstyrene, para-ethylstyrene, para-n-propylstyrene, para-iso-propylstyrene, para-n-butylstyrene, para-sec-butylstyrene, para-iso-butylstyrene, para-t-butylstyrene, isomers of para-decylstyrene, isomers of para-dodecylstyrene, and mixtures thereof.

In embodiments, the conjugated diene monomer is selected from the group consisting of isoprene, 1,3-butadiene, 2,3-dimethyl-1,3-butadiene, 1-phenyl-1,3-butadiene, 1,3-pentadiene, 1,3-hexadiene, 3-butyl-1,3-octadiene, farnesene, myrcene, piperylene, cyclohexadiene, and mixtures thereof.

In embodiments, each block A and A' independently has a molecular weight ($M_p$) of 3 - 100, or 5 - 80, or 10 - 70, or 3 - 70, or 5 - 65 kg/mol.

In embodiments, each block A and A' independently constitutes from 90 - 95, or 65 - 95, or 70 - 90, or 75 - 95,

or 80 - 95 wt.%, based on total weight of the SBC precursor.

In embodiments, when block B is a polymer block of a conjugated diene monomer, block B has a molecular weight ($M_p$) of 2 - 150, or 5 - 120, or 5 - 100, or 5 - 60 kg/mol. In embodiments, block B constitutes from 5 - 35, or 10 - 30, or 5 - 25, or 5 - 20 wt.%, based on total weight of the SBC precursor.

In embodiments, when block B is a copolymer block of a conjugated diene monomer and a vinyl aromatic monomer, block B has a molecular weight ($M_p$) of 30 - 150, or 40 - 120, or 50 - 100 kg/mol. In embodiments, block B constitutes from up to 60, or 10 - 50, or 10 - 40, or 15 - 45, or 10 - 35 wt.%, based on total weight of the SBC precursor.

In embodiments, when block B is a copolymer block of a vinyl aromatic monomer and a conjugated diene monomer, a weight ratio of polymerized vinyl aromatic monomer to polymerized conjugated diene monomer in the block B is > 1, or > 2, or ≥ 3.

In embodiments, block B before hydrogenation, has a vinyl content of up to 80, or 5 - 80, or 10 - 75, or 20 - 70 wt.%, based on total weight of polymerized conjugated diene monomers in the block B. Vinyl content can be measured before or after hydrogenation, via $^1H$ NMR.

In embodiments, each block A and A' independently has a hydrogenation level of < 30%, or < 25%, or < 20%, or < 10%.

In embodiments, when block B contains a polymer block of a conjugated diene monomer, block B has a hydrogenation level of > 80%, or > 90%, or > 95%, or > 98%, or > 99.5%, or up to 100%.

In embodiments, when block B contains a copolymer block of a conjugated diene monomer and a vinyl aromatic monomer, polymerized conjugated diene units in the block B has a hydrogenation level of > 80%, or > 90%, or > 95%, or > 98%, or > 99.5%, or up to 100%, and polymerized vinyl aromatic units has a hydrogenation level of < 30%, or < 25%, or < 20%, or < 10%.

In embodiments, the SBC precursor has a coupling efficiency (CE) of 50 - 95%, or 60 - 90%, or > 60%, or > 65%.

In embodiments, the SBC precursor has a polystyrene content of 70 - 95, or 75 - 95, or 80 - 95, or 85 - 95, or 75 - 85, or 80 - 90 wt.%.

In embodiments, the SBC precursor has a molecular weight ($M_p$) of 10 - 400, or 20 - 350, or 30 - 300, or 40 - 250, or 20 - 200, or 30 - 300 kg/mol.

In embodiments, the triblock copolymer is at least one selected from poly(styrene-paramethylstyrene/ethylene/butylene-styrene) (S-pMS/EB-S), poly(paramethylstyrene-styrene/ethylene/butylene-paramethylstyrene) (pMS-S/EB-pMS), poly(styrene-paramethylstyrene/ethylene/propylene-styrene) (S-pMS/EP-S), and poly(paramethylstyrene-styrene/ethylene/propylene-paramethylstyrene) (pMS-S/EP-pMS).

In embodiments, the tetrablock copolymer is at least one selected from poly(paramethylstyrene-ethylene/propylene-styrene-ethylene/propylene) (pMS-EP-S-EP), poly(styrene-ethylene/propylene-paramethylstyrene-ethylene/propylene) (S-EP-pMS-EP), poly(paramethylstyrene-ethylene/butylene-styrene-ethylene/butylene) (pMS-EB-S-EB), and poly(styrene-ethylene/butylene-paramethylstyrene-ethylene/butylene) (S-EB-pMS-EB). Each block B in the tetrablock copolymer can be a copolymer block of a vinyl aromatic monomer and a conjugated diene monomer.

In embodiments, the pentablock copolymer is at least one selected from poly(paramethylstyrene-ethylene/propylene-styrene-ethylene/propylene-paramethylstyrene) (pMS-EP-S-EP-pMS), poly(styrene-ethylene/propylene-paramethylstyrene-ethylene/propylene-styrene) (S-EP-pMS-EP-S), poly(paramethylstyrene-ethylene/butylene-styrene-ethylene/butylene-paramethylstyrene) (pMS-EB-S-EB-pMS), and poly(styrene-ethylene/butylene-paramethylstyrene-ethylene/butylene-styrene) (S-EB-pMS-EB-S). Each block B in the pentablock copolymer can be a copolymer block of a vinyl aromatic monomer and a conjugated diene monomer.

The SBC precursor can be prepared by methods known in the art and disclosed, e.g., in U.S. Patent No. 7449518. The SBC precursor can be prepared, e.g., by anionic polymerization. Other methods, such as cationic polymerization, can also be employed. The anionic polymerization initiator is generally an organometallic compound, such as an organolithium compound, e.g., ethyl-, propyl-, isopropyl-, n-butyl-, sec-butyl-, tert-butyl-, phenyl-, hexylbiphenyl-, hexamethylenedi-, butadieneyl-, isopreneyl-, 1,1-diphenylhexyllithium, or polystyryllithium. An amount of initiator needed is calculated based on the molecular weight to be achieved, generally from 0.002 - 5 wt.%, based on amount of monomers to be polymerized. Suitable solvents include aliphatic, cycloaliphatic, or aromatic hydrocarbons having from 4 to 12 carbon atoms, such as pentane, hexane, heptane, cyclopentane, cyclohexane, methylcyclohexane, decalin, isooctane, benzene, alkylbenzenes, such as toluene, xylene or ethylbenzene, or suitable mixtures thereof. Polymer chain termination can be achieved by quenching with a proton donor or a compound having a leaving group that can be displaced by the carbanionic polymer chain, followed by coupling of the resulting sequential block copolymer chains with a coupling agent (if present) and followed by a hydrogenation step for making the hydrogenated SBC.

(Quaternized Styrenic Block Copolymer (OSBC) or Ionomer)

In embodiments, the QSBC comprises at least one block copolymer selected from a triblock copolymer, a tetrablock copolymer, a pentablock copolymer, or mixtures thereof. At least one polymerized vinyl aromatic unit in at

least one block A and A' has a general formula (I):

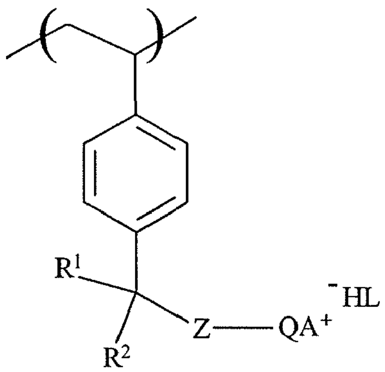

(I)

wherein, $R^1$ and $R^2$ independently a $C_1$ to $C_5$ alkyl group; Z is any of a linear alkyl chain of $C_{1-12}$, a cyclic alkyl chain of $C_{3-12}$, or a branched alkyl chain of $C_{4-12}$; $QA^+$ is a quaternary ammonium group; and HL is a counter ion selected from $OH^-$, $HCO_3^-$, $CO_3^{2-}$, $F^-$, $Cl^-$, $Br^-$, and $I^-$.

In embodiments, at least one block A and A' independently comprises polymerized styrene monomer, which is susceptible to quaternization, and the block B comprises a polymer block of conjugated diene monomer which is resistant to quaternization. In embodiments, when block B is a copolymer block of a styrene monomer and a conjugated diene monomer, polymerized styrene unit is susceptible to quaternization.

In embodiments, at least one polymerized vinyl aromatic unit in at least one block A and A' comprises one or more quaternary ammonium groups. In embodiments, the polymerized vinyl aromatic unit is a polymerized styrene unit.

(Methods of Preparation of OSBCs or xQSBCs )

In embodiments, QSBC is obtained by a series of reaction steps. In embodiments after hydrogenation of the SBC precursor, the hydrogenated SBC precursor is halogenated. In this step, the hydrogenated SBC precursor is reacted with at least one alkyl halide through Friedel Craft (FC) substitution reaction commonly known in the art, to obtain an alkyl halide containing SBC (AL-SBC). The FC substitution reaction can be carried in the presence of an acid catalyst, e.g., Bronsted acid, sulfuric acid, methanesulfonic acid, trifluoroacetic acid, p-toluenesulfonic acid, trifluoromethanesulfonic (triflic) acid, etc. The reaction can be performed at 0 - 40°C, or 5 - 30°C, or 0 - 25°C, or 0 - 20°C, for a sufficient time. Examples of halides include fluorine, chlorine, bromine, or iodine, and the substituted alkyl chain can be linear ($C_{1-12}$), branched ($C_{4-12}$), cyclic ($C_{3-12}$) chains. Any halogenating agent, e.g., 1,1-dimethyl-6-bromo-1-hexanol, can be used to obtain the AL-SBC (here Br-SBC). In embodiments, the blocks susceptible to quaternization is selectively halogenated by attaching the alkyl halide chain at the para position of the polymerized vinyl aromatic monomer. After halogenation, the AL-SBC can be recovered for further processing.

The alkyl halide can be used in amounts sufficient to obtain a desired degree of halogenation. In embodiments, the AL-SBC has a degree of halogenation of up to 100%, or 40 - 90%, or 45 - 80%, or 50 - 95%, or 55 - 90%, or 60 - 100%, or > 40%, or > 50%, or > 55%, relative to blocks susceptible to halogenation. The degree of halogenation can be measured by standard analytical techniques including $^1H$ NMR.

In embodiments after halogenation, the quaternization of the AL-SBC is carried out by reacting the AL-SBC with at least one quaternizing agent, e.g., a compound containing di or multi-amino groups. In embodiments, the QSBC i.e., quaternized SBC without cross-linking is an ionomer.

In embodiments, the QSBC is obtained by polymerizing monomers containing at least one quaternary ammonium group. In addition to using monomers with the quaternary ammonium functionality, a post-polymerization step is employed to introduce or add more functional group(s), e.g., acrylates, sulfides, epoxides, sulfur, etc., either same or different than already existing functional group.

(Formation of Film Containing xOSBC)

In embodiments, a film containing a cross-linked quaternized SBC (xQSBC) is prepared by first dissolving the AL-SBC in a suitable solvent or a mixture of two or more solvents to obtain a solution. To this solution, at least one cross-linking agent is added, followed by solution casting a film. The film containing the cross-linked polymer is then dipped in a bath containing at least one quaternizing agent to obtain the film containing the xQSBC. Alternately, instead of

dipping into a quaternizing agent, the film is quaternized by spraying, coating, or treating the film with the quaternizing agent for a cross-linked quaternized SBC. Examples of solvents include methyl acetate, ethyl acetate, propyl acetate, isopropyl acetate, butyl acetate, isobutyl acetate, methanol, ethanol, 1-propanol, butanol, toluene, xylene, hexane, heptane, THF, n-hexane, cyclohexane, methylene chloride, ethylene chloride, isopropyl alcohol, acetone, N,N-dimethylacetamide, 1-methyl-2-pyrrolidinone, 1,3-dioxolane, 2-methoxy ethanol, dimethylformamide, benzyl alcohol, and mixtures thereof. In embodiments, a mixture of two solvents in a weight of 10:90 to 90:10, or 30:70 to 70:30 is used. Examples of the mixture of two solvents can be a polar solvent and a non-polar solvent, e.g., toluene and at least one alcohol, xylene and at least one alcohol, etc.

Alternatively in embodiments the steps are reversed, with the quaternization of the AL-SBC is performed prior to cross-linking to obtain a film containing the xQSBC.

In other embodiments, the cross-linking and quaternization of the AL-SBC is carried out in-situ (in a single step) by dissolving the AL-SBC in one or more solvents and adding at least one quaternizing agent and at least one cross-linking agent to obtain a mixture containing the xQSBC. A film of the xQSBC is next obtained by casting the mixture onto a substrate. In embodiments, the mixture has a solid concentration of 5 - 50%, or 10 - 40%, or 5 - 30%, or 10 - 30%, or > 5%, or > 15%. The solvents used for this alternative embodiment are as described above.

In embodiments, the SBC after halogenation (i.e., AL-SBC) is not recovered and present in the solution. To this solution, at least one quaternizing agent and at least one cross-linking agent are added followed by casting a film containing a xQSBC.

In embodiments, the quaternizing agent is selected from the group consisting of dimethyl amine, trimethyl amine (TMA), 1-methyl piperidine, 1-methylimidazole, 1,2-dimethylimidazole, 2,4-dimethylimidazole, N-methylmorpholine, 3-hydroxypropyldimethylamine, n-butyldimethylamine, di(3-hydroxypropyl)methylamine, 2,3-dihydroxypropyldimethylamine, 3-hydroxypropyldiethylamine, 2-hydroxypropyldimethylamine, 4-hydroxybutyldimethylamine, 2-hydroxyethyldimethylamine, n-propyldimethylamine, 2-hydroxyethoxyethyldimethylamine, di(2-hydroxyethyl)methylamine, benzyldimethylamine and 4-hydroxybenzyldimethylamine, 3-ethylpyridine, 4-propylpyridine, 4-tertbutylpyridine, 4-cyanopyridine, 4-isopropylpyridine, 4-methoxypyridine, 3,4-lutidine, 3-methoxypyridine, 4-pyridinemethanol, N,N,N,N-tetramethyl hexyl diamine, and mixtures thereof.

In embodiments, the QSBC comprises phosphonium cations in place of quaternary ammonium cations. The phosphonium cation can be obtained by using a phosphorous containing compound, e.g., trimethylphosphine, tributylphosphine, tricyclohexylphosphine, triphenylphosphine, tritolylphosphine, methylphosphite, ethylphosphite, phenylphosphite, tris(trimethoxyphenyl) phosphine ($P(Ph(OMe)_3)_3$), triphenyl phospine ($P(Ph)_3$), etc.

In embodiments, the cross-linking agent is a polyamine represented by a general formula II having two primary or tertiary amines at its molecular terminals:

$$(R^5)_2N\text{-}(CH_2)_t\text{-}N(R^5)_2 \qquad \text{(II)}$$

wherein t = 1 to 7; and $R^5$ is independently a H atom, a $C_{1-5}$ alkyl group, or a $C_{1-5}$ hydroxyalkyl group.

In embodiments, the cross-linking agent is selected from the group consisting of 1,6-hexanediamine, N,N,N',N'-tetramethyl-1,6-hexanediamine (TMHDA), ethylene diamine, diethylene triamine, triethylene tetramine, tetraethylenepentamine, polyethyleneimine, phenylenedianilne, N,N,N',N'-tetramethyldiaminomethane, N,N,N',N'-tetramethyl-1,2-diaminoethane, N,N,N',N'-tetramethyl-1,3-diaminopropane, N,N,N',N'-tetramethyl-1,6-diaminohexane, N,N,N',N'-tetramethylbenzidine, N,N,N',N'-tetramethyl-4,4'-diaminodiphenylmethane, polyvinyl pyridine, a primary or secondary aminated product from polychloromethylstyrene, trialkylamine such as trimethyl amine, triethyl amine, tributyl amine, an aromatic amine such as N,N-dimethylaniline or N-methylpyrrole, a heterocyclic amine such as N-methylpyrrolidine or N-methylmorpholine, an alcohol amine such as N-methyl-N,N-diethanolamine, N,N-dimethyl-N-ethanolamine, triethanolamine, methylenediamine, ethylene diamine, trimethylene diamine, hexamethylenediamine, phenylenediamine, pyridazine, pyrimidine, pyrazine, cinnoline, phthalazine, quinazoline, quinoxaline, 1-methylimidazole, N,N'-dimethylpiperazine, (1,4) diazabicyclo (2.2.2) octane, triazine, hexamethylenetetramine, and mixtures thereof.

In embodiments, other classes of cross-linking agents include bi- or polyfunctional compounds, for example divinylbenzene, halides of aliphatic or araliphatic hydrocarbons, such as 1,2-dibromoethane, bis(chloromethyl)benzene, or silicon tetrachloride, dialkyl- or diarylsilicon dichloride, alkyl- or arylsilicon trichloride, tin tetrachloride, alkylsilicon methoxides, alkyl silicon ethoxides, polyfunctional aldehydes, such as terephthalic dialdehyde, ketones, esters, anhydrides or epoxides, methyltrimethoxysilane (MTMS), methyltriethoxysilane (MTES), tetramethoxysilane (TMOS), dimethyladipate, gamma-glycidoxypropyl-trimethoxy silane, and mixtures thereof.

The cross-linking agent is used in amounts sufficient to obtain a desired degree of cross-linking. In embodiments, the xQSBC has a degree of cross-linking of up to 100%, or 50 - 90%, or 50 - 80%, or 50 - 95%, or 60 - 100%, or 60 - 90%, or > 50%, or > 55%, relative to blocks susceptible to cross-linking. The degree of cross-linking can be estimated by solid state NMR.

In embodiments, at least an additive is added during the preparation of the film. Examples of additives include

initiators, activators, curing agents, stabilizers, neutralizing agents, thickeners, coalescing agents, slip agents, release agents, anti-microbial agents, surfactants, antioxidants, antiozonants, color change pH indicators, plasticizers, tackifiers, film forming additives, dyes, pigments, UV stabilizers, UV absorbers, fillers, other resins, redox couples, fibers, flame retardants, viscosity modifiers, wetting agents, deaerators, toughening agents, colorants, heat stabilizers, lubricants, drip retardants, antiblocking agents, anti-static agents, processing aids, stress-relief additives, and mixtures thereof. In embodiments, the additive is added in amounts of 0 - 10, or 0.1 - 10, or 0.5 - 5 wt.%, based on total weight of the film.

The xQSBC polymer can be formed onto a common flat shape, hollow fiber, or hollow tube shape. The product (i.e., the xQSBC) can be a self-supported single layer (film), a thin functional layer over a porous substrate or a composite layer containing reinforcing materials, e.g., fibers, fillers, etc. Independent of a product form of the xQSBC, a film containing the xQSBC in embodiments is formed by using casting, electrospinning, extrusion, compression, coating, such as dipping, flow coating, roll coating, bar coating, spray coating, curtain, rotogravure, brushing, wire wound rod coating, pan fed reverse roll coating, nip-fed coating, spraying, knife coating, spin coating, immersion coating, slot-die coating, ultrasonic spray coating, and the like. The film drying condition can be based on the use of the solvent(s) and the film forming process. In embodiments, the film is dried at 25 to up to 200°C, or 25 - 180°C, or 25 - 150°C, or 40 - 120°C, or 25 - 80°C, for 1 - 4 days, or 1 - 3 days. In embodiments, the film forms highly ordered morphology, assembling a continuous ion conducting domain perpendicular to the membrane surface, maximizing conduction, and minimizing tortuosity.

(Properties)

The QSBC or ionomer is compatible with any AEM and has similar level of ion conductivity as that of the AEM.

In embodiments, a film containing the xQSBC has a thickness of 0.1 - 500 μm, or 1 - 200 μm, or 10 - 100 μm, or 1 - 50 μm, or 20 - 150 μm, or 50 - 300 μm, or 50 - 90 μm. The film is characterized as being elastic and of low swell during service in aqueous solutions. The film is highly dimensionally stable, has high ion transport characteristics, methanol resistance, high barrier properties, high hydrogen selectivity, hardness, thermal / oxidative stability, and anti-fouling properties.

In embodiments, the film has a water uptake of 1 - 10, or 10 - 50, or 20 - 60, or 30 - 80 wt.%, based on total initial weight of the film, in DI water at 80°C for 24 hours.

In embodiments, the film has an ion exchange capacity (IEC) of 1.0 - 3.5, or 1.2 - 3.0, or 1.3 - 3, or 1.3 - 1.9 or > 1, or < 3, meq/g.

In embodiments, the film aged in 1M KOH solution at 80°C at different time periods is characterized as having the following $OH^-$ ion conductivities and other mechanical properties of the soaked film.

In embodiments, the film after aging in 1M KOH solution at 80°C for 1000 hours, has a reduction in $OH^-$ ion conductivity of < 50%, or < 45%, or < 40%, or 1 - 50%, or 5 - 40%, or 10 - 35%, or 5 - 25% than $OH^-$ ion conductivity of the film before aging, both measured in mS/cm at 80°C.

In embodiments, the film after aging in 1M KOH solution at 80°C for 10000 hours, has a reduction in $OH^-$ ion conductivity of < 60%, or < 55%, or < 50%, or 5 - 60%, or 10 - 55%, or 15 - 50%, or 20 - 60% than $OH^-$ ion conductivity of the film before aging, both measured in mS/cm at 80°C.

In embodiments, the film after aging in 10mM $K_2CO_3$ solution at 65°C for 2000 hours, has a reduction in $OH^-$ ion conductivity of < 10%, or < 8%, or < 5%, or < 2%, or 0.1 - 10%, or 0.1 - 5%, measured in mS/cm at 80°C.

In embodiments, the film after aging in 4M KOH solution at 65°C for 2000 hours, has a reduction in $OH^-$ ion conductivity of < 45%, or < 40%, or < 35%, or 5 - 45%, or 10 - 40%, or 5 - 35%, measured in mS/cm at 80°C.

In embodiments, the film has a tensile stress, in dry condition, of 5 - 45, or 7 - 40, or 10 - 45, or 7 - 40, or 15 - 45 MPa, measured according to ASTM D412.

In embodiments, the film has a Young's Modulus, in dry condition, of 50 - 2500, or 100 - 1500, or 400 - 1300 MPa, measured according to ASTM D412.

In embodiments, the film has an elongation at break, in dry condition, of 1 - 100%, or 1 - 50%, or 1 - 10%, measured according to ASTM D412.

In embodiments, the film has a tensile strength, in dry condition, of 15 - 40, or 20 - 35, or 15 - 30 MPa, measured according to ASTM D412.

In embodiments, the film has a toughness, in dry condition, of 1 - 8, or 1.5 - 6, or 1 - 5 $MJ/m^3$, measured according to ASTM D412.

In embodiments, the film after aging in 1M KOH solution at 80°C for 330 hours, has a Young's Modulus of 400 - 700, or 450 - 650, or 500 - 600 MPa, an elongation at break of 1 - 20%, or 5 - 18%, or 10 - 20%, a tensile strength of 5 - 20, or 7 - 18, or 10 - 20 MPa, and a toughness of 1 - 5, or 1.2 - 4, or 1 - 3 $MJ/m^3$, all are measured according to ASTM D412.

In embodiments, the film after aging in 1M KOH solution at 80°C for 500 hours, has a Young's Modulus of 400 - 700, or 450 - 650, or 500 - 600 MPa, an elongation at break of 1 - 20%, or 5 - 18%, or 10 - 20%, a tensile strength of 5 - 20, or 7 - 18, or 10 - 20 MPa, and a toughness of 1 - 5, or 1.2 - 4, or 1 - 3 $MJ/m^3$, all are measured according to ASTM D412.

In embodiments, the film after aging in 1M KOH solution at 80°C for 720 hours, has a Young's Modulus of 400

- 700, or 450 - 650, or 500 - 600 MPa, an elongation at break of 1 - 20%, or 5 - 18%, or 10 - 20%, a tensile strength of 5 - 20, or 7 - 18, or 10 - 20 MPa, and a toughness of 1 - 5, or 1.2 - 4, or 1.5 - 4 MJ/$m^3$, all are measured according to ASTM D412.

In embodiments, the film has a KCl perm-selectivity of > 70%, or > 80%, or > 85%, or > 90%, measured at 25°C.

In embodiments, the film has a resistance ($R_{m+s}$) of < 2, or < 1.9, or < 1.8 $\Omega$*$cm^2$.

(Applications)

The QSBC (without cross-linking) is an ionomer and can be used in polymer electrolytes, binder for electrodes, binder for membranes, coating for electrodes, separator, parts of electrode compositions.

The xQSBC (with cross-linking) has a selectively quaternized polymer blocks, which will find utility in applications where the combination of good strength, water and hydroxide transport characteristics, improved methanol resistance, easy film or membrane formation is desired.

The xQSBC can be used in electrochemical applications, such as in water electrolyzers (electrolytes), fuel cells (separator phase), AEMs, in electrode assemblies, including those for fuel cells, chemical synthesis, water electrolyzers, batteries (electrolyte separator), supercapacitors (solid or gel electrolytes), separation cell (electrolyte barrier) for metal recovery processes, sensors (particularly for sensing humidity), humidity control devices, energy storage solutions such as in vanadium or iron redox flow battery membrane, in lithium-ion batteries as solid polymer electrolyte, membrane capacitive deionization (MCDI), reverse electrodialysis, hydrogen peroxide synthesis, Li extraction from brine, and the like.

(Examples)

The following examples are intended to be non-limiting.

The following tests were used.

The ion conductivity ($OH^-$ ion) measurement was conducted by using Electrochemical Impedance Spectroscopy (EIS). AEMs were ion-exchanged to $OH^-$ form by treating with 1M KOH solution. The measurement was performed from 20 to 80°C and impedance was measured over a frequency range from 100kHz to 1Hz. The ion conductivity was calculated from the charted impedance by following the equation:

$$\sigma\ (mS/cm) = \frac{L}{R \times W \times T} \times 1000$$

where L (cm) is the length between the two inner electrodes; *R* ($\Omega$) is the measured resistance of conductivity strip; *W* (cm) is the specimen width; and *T* (cm) is the specimen thickness.

The film (membrane) resistance was measured using LCR resistance meter. The frequency was set at 10 kHz as alternating current frequency and recorded the resistance ($\Omega$).

The perm-selectivity was determined using a static membrane potential measurement cell. Prior to measurement, the membrane was equilibrated in a 0.05 M KCl solution for 24 hours. The experimental set-up consisted of two cells separated by the membrane. On one side of the membrane a 0.05 M KCl solution flowed through the cell and on the other side a 0.5 M KCl solution was used. Two double junction Ag/AgCl reference electrodes were placed into the solution on either side of the membrane and were used to measure the potential difference over the membrane, at 25°C. The theoretical membrane potential is the membrane potential for a 100% perm-selective membrane as calculated from the Nerst equation:

$$\text{Perm} - \text{selectivity or } P_{select}(\%) = \frac{\Delta \text{m} V_{meas}}{\Delta \text{m} V_{theo}} * 100$$

$\Delta mV_{theo}$ = Theoretical membrane potential in millivolts (mV)
$\Delta mV_{meas}$= True membrane potential in mV-DC.

The degree of halogenation of the QSBC was determined by $^1$H NMR (Varian 500 MHz spectrometer, 23°C).

Mechanical properties, including toughness, Young's Modulus, tensile strength, and elongation at break, all are measured according to ASTM D412.

The components used in examples include:

SBC-1 (Precursor): A pentablock copolymer with configuration of pMS(13)-EP(10)-S(44)-EP(10)-pMS(13), block B

content (i.e., both EP blocks) of 22 wt.%, Mol. Wt. ($M_p$) of 90 kg/mol and coupling efficiency of 68%.
SBC-2 (Precursor): A pentablock copolymer with configuration of pMS(17)-EP(13)-S(58)-EP(13)-pMS(17), block B content (i.e., both EP blocks) of 22 wt.%, Mol. Wt. ($M_p$) of 118 kg/mol and coupling efficiency of 68%.
SBC-3 (Precursor): A pentablock copolymer with configuration of S(21)-pMS/EB(83)-S(21), block pMS/EB has a weight ratio of 3/1, Mol. Wt. ($M_p$) of 125 kg/mol and coupling efficiency of 73%.
SBC-4 (Precursor): A pentablock copolymer with configuration of S(20)-pMS/EB(89)-S(20), block pMS/EB has a weight ratio of 3/1, Mol. Wt. ($M_p$) of 129 kg/mol and coupling efficiency of 89%.

(Example 1)

Bromination of the SBC precursor. 60 g of SBC-1 and 59 g of 7-bromo-2-methylheptan-2-ol were added in a flask. To this flask, dichloromethane solvent was added to dissolve contents and 50 g of triflic acid was added. The reaction content was stirred at 25°C for 2 h, after which the reaction content was poured into methanol to precipitate the brominated SBC-1 (Br-SBC-1). Similar procedure was used to brominate other SBCs including SBC-2, SBC-3, and SBC-4.

(Example 2)

Cross-linking and quaternization of brominated SBC. 60 g of Br-SBC-1 was dissolved in THF solvent and added 7 g of N,N,N,N-tetramethyl hexyl diamine as cross-linking agent to cross-link the Br-SBC. A film was casted from this solution onto Mylar substrate (silicone coated polyester film) and dried. The film after drying was removed from the substrate and immersed in trimethyl amine (TMA) solution (45% in water) for quaternization to obtain a cross-linked quaternized SBC (xQSBC-1a) film having degree of cross-linking of 60%. Using similar procedure, xQSBC-1b, xQSBC-2a, xQSBC-2b, xQSBC-3a, xQSBC-4a were obtained.

(Example 3)

Cross-linking and quaternization of brominated SBC. Procedure of example 2 was repeated by replacing THF with toluene/propanol mixture in 70:30 weight ratio to obtain xQSBC-1-ss.

(Example 4)

Cross-linking and quaternization of brominated SBC. 60 g of Br-SBC-1 was dissolved in toluene/propanol mixture (in 70:30 weight ratio) and added 18 g of methyl piperidine as quaternizing agent to quaternize the polymer. To this reaction content, 7 g of N,N,N,N-tetramethyl hexyl diamine as cross-linking agent was added. A film of cross-linked quaternized SBC (xQSBC-1-2p) was obtained by casting the reaction content onto Mylar substrate (silicone coated polyester film). After drying, the film was removed from the substrate for various tests.

The degree of halogenation and degree of cross-linking of each polymer film is shown in table 1 and $OH^-$ ion conductivity of respective polymer films presented in tables 2, 3 and 4. Perm-selectivity and resistance of films are shown in table 5. Each film has a thickness ranging from 50 to 90 μm.

Table 1

| Samples | Degree of halogenation (%) | Degree of cross-linking (%) |
|---|---|---|
| xQSBC-1a | 60 | 60 |
| xQSBC-1b | 60 | 100 |
| xQSBC-2a | 80 | 80 |
| xQSBC-2b | 80 | 100 |
| xQSBC-1-ss | 60 | 60 |
| xQSBC-1-2p | 60 | 60 |
| xQSBC-3a | 90 | 90 |
| xQSBC-4a | 90 | 90 |

Table 2

| Samples | IEC | OH⁻ ion conductivity (mS/cm), after aging in 1M KOH solution at 80°C | | | | | | |
|---|---|---|---|---|---|---|---|---|
| | | Measured at 80°C | | | | | | |
| | | 0 hour | 500 hours | 1000 hours | 2000 hours | 5000 hours | 7000 hours | 10000 hours |
| xQSBC-1a | 1.55 | 30.3 | 34.4 | 17.7 | 17.0 | 15.5 | 18.5 | 16.6 |
| xQSBC-1b | 1.51 | 25.9 | 16.1 | 16.4 | 14.4 | 9.5 | 12.3 | 9.6 |
| xQSBC-2a | 1.60 | 62.9 | 61.3 | 50.3 | NA | NA | NA | NA |
| xQSBC-2b | 1.63 | 31.4 | 35.0 | 41.3 | NA | NA | NA | NA |
| xQSBC-1-ss | 1.47 | 64.7 | 32.4 | 51.2 | NA | NA | NA | NA |
| xQSBC-1-2p | 1.52 | 19.4 | 25.2 | 22.1 | NA | NA | NA | NA |
| xQSBC-3a | 1.40 | 39.2 | 34.5 | 34.3 | NA | NA | NA | NA |
| xQSBC-4a | 1.40 | 27.7 | 27.0 | 23.3 | NA | NA | NA | NA |
| NA=Not available | | | | | | | | |

Table 3

| Sample | OH⁻ ion conductivity (mS/cm), after aging in 10mM $K_2CO_3$ solution at 65°C | | | |
|---|---|---|---|---|
| | Measured at 80°C | | | |
| | 0 hour | 500 hours | 1000 hours | 2000 hours |
| xQSBC-1a | 36.0 | 39.0 | 48.6 | 35.5 |

Table 4

| Sample | OH⁻ ion conductivity (mS/cm), after aging in 4M KOH solution at 65°C | | | |
|---|---|---|---|---|
| | Measured at 80°C | | | |
| | 0 hour | 500 hours | 1000 hours | 2000 hours |
| xOSBC-1a | 42.4 | 38.7 | 47.1 | 28.8 |

Table 5

| Samples | Perm-selectivitv % (25°C) | Resistance Rm+s (Ω*$cm^2$) (25°C) |
|---|---|---|
| xQSBC-1a | 95 | 0.40 |
| xQSBC-1b | 102 | 1.81 |

Table 6

| Samples | Young's Modulus (MPa) | Elongation at break (%) | Tensile strength (MPa) | Toughness ($MJ/m^3$) |
|---|---|---|---|---|
| xQSBC-1a | 698 | 12 | 25 | 2.0 |
| xQSBC-1a | 547 | 14 | 14 | 1.7 |

(continued)

| Samples | Young's Modulus (MPa) | Elongation at break (%) | Tensile strength (MPa) | Toughness ($MJ/m^3$) |
|---|---|---|---|---|
| after aging in KOH at 80°C for 330 hours | | | | |
| xQSBC-1a after aging in KOH at 80°C for 500 hours | 547 | 16 | 13 | 1.8 |
| xQSBC-1a after aging in KOH at 80°C for 720 hours | 516 | 18 | 13 | 2.0 |

As used herein, the term "comprising" means including elements or steps that are identified following that term, but any such elements or steps are not exhaustive, and an embodiment can include other elements or steps. As used herein, the term "comprising" means including elements or steps that are identified following that term, but any such elements or steps are not exhaustive, and an embodiment can include other elements or steps. Although the terms "comprising" and "including" have been used herein to describe various aspects, the terms "consisting essentially of" and "consisting of" can be used in place of "comprising" and "including" to provide for more specific aspects of the disclosure and are also disclosed.

## Claims

**1.** A quaternized styrenic block copolymer comprising a block copolymer selected from a triblock copolymer, a tetrablock copolymer, a pentablock copolymer, and mixtures thereof,
wherein:

the triblock copolymer has a general configuration selected from: A-B-A', B-A-B, B-A'-B, (A-B)nX, (A'-B)nX, (B-A)nX, (B-A')nX, and mixtures thereof, wherein each block B is a copolymer block of a vinyl aromatic monomer and a conjugated diene monomer,
the tetrablock copolymer has a general configuration selected from: A-A-B-A, A'-A'-B-A', A'-A-B-A, A'-A-B-A', A-A'-B-A', and mixtures thereof,
wherein each block B is a polymer block of a conjugated diene monomer or a copolymer block of a vinyl aromatic monomer and a conjugated diene monomer, and
the pentablock copolymer has a general configuration selected from: A-B-A-B-A, A'-B-A'-B-A', A'-B-A-B-A, A'-B-A-B-A', A-B-A'-B-A, B-A-B-A-B, B-A'-B-A'-B, B-A'-B-A-B, (A-B-A')nX, (A'-B-A)nX, (B-A-B)nX, (B-A'-B)nX, and mixtures thereof, wherein each block B is a polymer block of a conjugated diene monomer or a copolymer block of a vinyl aromatic monomer and a conjugated diene monomer; and

wherein,

n is an integer from 2 to 30,
X is a residue of a coupling agent, and
each block A and A' is independently a polymer block of a vinyl aromatic monomer, wherein at least one polymerized vinyl aromatic unit in at least one block A and A' has a general formula (I):

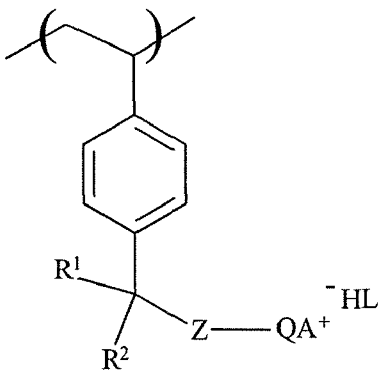

(I)

wherein,

$R^1$ and $R^2$ independently is a $C_1$ to $C_5$ alkyl group,
Z is any of a linear alkyl chain of $C_{1-12}$, a cyclic alkyl chain of $C_{3-12}$, or a branched alkyl chain of $C_{4-12}$,
$QA^+$ is a quaternary ammonium group, and
HL is a counter ion selected from $OH^-$, $HCO_3^-$, $CO_3^{2-}$, $F^-$, $Cl^-$, $Br^-$, and $I^-$.

**2.** The quaternized styrenic block copolymer of claim 1, wherein the quaternized styrenic block copolymer is cross-linked with a cross-linking agent to obtain a cross-linked quaternized styrenic block copolymer.

**3.** A film comprising the cross-linked quaternized styrenic block copolymer of claim 2, wherein the film has a thickness of 0.1 to 500 μm.

**4.** The film of claim 3, wherein the film after aging in 1M KOH solution at 80°C for 1000 hours, has a reduction in $OH^-$ ion conductivity of < 50% than $OH^-$ ion conductivity of the film before aging, both measured in mS/cm at 80°C.

**5.** The film of claim 3, wherein the film after aging in 1M KOH solution at 80°C for 10000 hours, has a reduction in $OH^-$ ion conductivity of < 60% than $OH^-$ ion conductivity of the film before aging, both measured in mS/cm at 80°C.

**6.** The film of any of claims 3-5, wherein the film has at least one of:

a perm-selectivity of > 70%, measured using a static membrane potential measurement cell at 25°C; and
a resistance ($R_{m+s}$) of < 2 $\Omega$*$cm^2$, measured using LCR resistance meter at 10 kHz.

**7.** The film of any of claims 3-5, wherein the film has an ion exchange capacity (IEC) of 1.2 to 3.0 meq/g.

**8.** The film of any of claims 3-5, wherein the film, in dry condition, has at least one of:

a Young's Modulus of 50 to 2500 MPa;
an elongation at break of 1 to 100%;
a tensile strength of 15 to 40 MPa; and
a toughness of 1 to 8 $MJ/m^3$, all are measured according to ASTM D412.

**9.** The film any of claims 3-5, wherein the film after aging in 1M KOH solution at 80°C for 500 hours, has at least one of:

a Young's modulus of 400 to 700 MPa;
an elongation at break of 1 to 20%;
a tensile strength of 5 to 20 MPa; and
a toughness of 1 to 5 $MJ/m^3$; all are measured according to ASTM D412.

**10.** The quaternized styrenic block copolymer of any of claims 1-2, wherein when the block B is a copolymer block of a vinyl aromatic monomer and a conjugated diene monomer, wherein the block B has a weight ratio of the polymerized

vinyl aromatic monomer to the polymerized conjugated diene monomer of > 1.

**11.** The quaternized styrenic block copolymer of any of claims 1-2, wherein the quaternized styrenic block copolymer is obtained by halogenation and quaternization of a styrenic block copolymer precursor, and wherein quaternization is performed by using at least one quaternizing agent selected from the group consisting of dimethyl amine, trimethyl amine, 1-methyl piperidine, 1-methylimidazole, 1,2-dimethylimidazole, 2,4-dimethylimidazole, N-methylmorpholine, 3-hydroxypropyldimethylamine, n-butyldimethylamine, di(3-hydroxypropyl)methylamine, 2,3-dihydroxypropyldimethylamine, 3-hydroxypropyldiethylamine, 2-hydroxypropyldimethylamine, 4-hydroxybutyldimethylamine, 2-hydroxyethyldimethylamine, n-propyldimethylamine, 2-hydroxyethoxyethyldimethylamine, di(2-hydroxyethyl)methylamine, benzyldimethylamine and 4-hydroxybenzyldimethylamine, 3-ethylpyridine, 4-propylpyridine, 4-tertbutylpyridine, 4-cyanopyridine, 4-isopropylpyridine, 4-methoxypyridine, 3,4-lutidine, 3-methoxypyridine, 4-pyridinemethanol, N,N,N,N-tetramethyl hexyl diamine, and mixtures thereof.

**12.** The quaternized styrenic block copolymer of any of claims 1-2, wherein the cross-linking agent is a polyamine represented by a general formula II:

$$(R^5)_2N\text{-}(CH_2)_t\text{-}N(R^5)_2 \qquad (II)$$

wherein t = 1 to 7; and $R^5$ is independently a H atom, a $C_{1-5}$ alkyl group, or a $C_{1-5}$ hydroxyalkyl group.

**13.** The quaternized styrenic block copolymer of any of claims 1-2, wherein at least one block A and A' independently comprises a polystyrene block containing at least one quaternary ammonium group.

**14.** The quaternized styrenic block copolymer of any of claims 1-2, wherein each block A and A' independently has a molecular weight ($M_p$) of 3 to 100 kg/mol;

wherein the block B has a molecular weight ($M_p$) of 2 to 150 kg/mol, when the block B is a polymer block of a conjugated diene monomer; and
wherein the block B has a molecular weight ($M_p$) of 30 to 150 kg/mol, when the block B is a copolymer block of a conjugated diene monomer and a vinyl aromatic monomer.

**15.** An anion exchange membrane (AEM) comprising the cross-linked quaternized styrenic block copolymer of claim 2.

Europäisches Patentamt
European Patent Office
Office européen des brevets

# EUROPEAN SEARCH REPORT

Application Number
EP 23 21 5649

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JEON JONG YEOB ET AL: "Synthesis of Aromatic Anion Exchange Membranes by Friedel-Crafts Bromoalkylation and Cross-Linking of Polystyrene Block Copolymers", MACROMOLECULES, vol. 52, no. 5, 20 February 2019 (2019-02-20), pages 2139-2147, XP093124788, US ISSN: 0024-9297, DOI: 10.1021/acs.macromol.8b02355 * examples * * scheme 1 * ----- | 1-15 | INV. C08F8/44 C09D153/02 B01D71/28 B01D71/80 C08F8/24 C08F8/32 C08J5/18 |
| X | US 2020/238272 A1 (BAE CHULSUNG [US] ET AL) 30 July 2020 (2020-07-30) * figures 2B, 2C * * claims; examples * ----- | 1,10,11, 13,14 | |
| X | JONG YEOB JEON ET AL: "Ionic Functionalization of Polystyrene- b -poly(ethylene- co -butylene)- b -polystyrene via Friedel-Crafts Bromoalkylation and Its Application for Anion Exchange Membranes", ECS TRANSACTIONS, vol. 80, no. 8, 24 August 2017 (2017-08-24), pages 967-970, XP055507087, US ISSN: 1938-6737, DOI: 10.1149/08008.0967ecst * the whole document * ----- | 1,10,11, 13,14 | TECHNICAL FIELDS SEARCHED (IPC) C09D C08F B01D C08J |
| X,P | EP 4 253 427 A1 (KRATON POLYMERS NEDERLAND B V [NL]) 4 October 2023 (2023-10-04) * claims; examples * ----- | 1,10,11, 13,14 | |

The present search report has been drawn up for all claims

1

| Place of search | Date of completion of the search | Examiner |
|---|---|---|
| Munich | 12 April 2024 | Friebe, Lars |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 23 21 5649

This annex lists the patent family members relating to the patent documents cited in the above-mentioned European search report. The members are as contained in the European Patent Office EDP file on
The European Patent Office is in no way liable for these particulars which are merely given for the purpose of information.

12-04-2024

| Patent document cited in search report | Publication date | Patent family member(s) | Publication date |
|---|---|---|---|
| US 2020238272 A1 | 30-07-2020 | US 2020238272 A1 | 30-07-2020 |
| | | US 2022266239 A1 | 25-08-2022 |
| EP 4253427 A1 | 04-10-2023 | CN 116891558 A | 17-10-2023 |
| | | EP 4253427 A1 | 04-10-2023 |
| | | JP 2023147267 A | 12-10-2023 |
| | | US 2023312849 A1 | 05-10-2023 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 7449518 B


### Non-patent literature cited in the description


- Determination of the ion exchange capacity of anion-selective membrane. *International Journal of Hydrogen Energy,* 26 March 2014, vol. 39 (10), 5054-5062